# EUROPEAN PATENT SPECIFICATION

(11) **EP 3 315 429 B1**
(45) Date of publication and mention of the grant of the patent: **23.02.2022**
(21) Application number: 16813776.8
(22) Date of filing: 25.04.2016
(51) Int. Cl.: B65D 85/804, A47J 31/06

(54) **CAPSULE FOR PREPARING A NUTRITIONAL BEVERAGE, WITH CONTROLLED OUTLET SYSTEM**
KAPSEL ZUR ZUBEREITUNG EINES NAHRHAFTEN GETRÄNKS MIT GESTEUERTEM AUSLASSSYSTEM
CAPSULE DE PRÉPARATION DE BOISSON ALIMENTAIRE AVEC SYSTÈME DE SORTIE CONTRÔLÉE

(30) Priority: 26.06.2015 ES 201530922
(43) Date of publication of application: 02.05.2018
(73) Proprietor: Cocatech, S.L.U., 28001 Madrid (ES)
(72) Inventor: FERNÁNDEZ SAENZ, Pedro, 28001 Madrid (ES); DE LA FUENTE MARTÍN, Juan Antonio, 28001 Madrid (ES); LARREA ORTIZ, Naiara, 28001 Madrid (ES); SUANES FONCEA, Santiago, 28001 Madrid (ES)
(74) Representative: Ungria López, Javier
(86) International application number: PCT/ES2016/070298
(87) International publication number: WO 2016/207456

(56) References cited:
- WO-A1-2012/007257
- WO-A1-2014/033339
- WO-A1-2014/184404
- WO-A2-03/059778
- WO-A2-2009/006374
- ES-A1- 2 234 445
- ES-A1- 2 538 740
- PT-E- 2 133 285
- PT-E- 2 133 285

## Description

### Object of the invention

The present disclosure relates to a nutritional drink preparation capsule comprising a controlled outlet system of the nutritional drink.

The homogenisation of the nutritional drink in a lower chamber inside the capsule and the gradual outlet of the drink towards the outside of the capsule are facilitated by the controlled outlet system.

The capsule, object of the present disclosure, has a special application in the industry that manufactures, distributes and markets nutritional drinks and receptacles for nutritional drinks, as well as in the industry that manufactures plastic containers.

### Technical problem to be solved and background of the invention

Currently there are different types of capsules for the preparation of nutritional drinks that are known, especially capsules intended for preparing coffee and infusions, which usually require the use of specific machines for preparing drinks wherein the capsules are inserted and, after hot water is injected under pressure inside the capsule, the nutritional drink is extracted from the lower portion thereof.

Through years of experience designing capsules for the preparation of coffee, it has been observed that it is vital to have an adequate outlet and/or extraction system for the nutritional drink. An adequate outlet system for the nutritional drink guarantees an adequate mixture of the injected water with the food substance stored inside the capsule, such that the nutritional drink that comes out of the capsule, which is to be consumed by the user, has the best qualities for consumption.

Likewise, an adequate outlet system for the nutritional drink guarantees that the nutritional drink comes out in a controlled manner, preventing it from spurting or rushing out, and creating a homogeneous outlet stream of the beverage.

In this regard, the Spanish Patent document ES 2424296 B2 may be cited, which describes a retention and redirection system for nutritional drink preparation capsules comprising a spike-shaped body that projects outward from the capsule through the lower portion thereof, where said spike-shaped body defines, in the inside of the capsule, a hollow zone or bowl comprising a flange provided with openings that filter the nutritional drink and push it in a controlled manner towards the outer wall of the spike, the drink producing a shape that is referred to as a "mouse tail" as it falls.

The present disclosure refers to a drink preparation capsule which, using the teachings from the aforementioned document, has a controlled outlet system that improves the outlet and/or extraction of the nutritional drink towards the outside of the capsule.

Another prior art document that may be cited is WO 03/059778 A2. This document discloses a closed capsule designed to be extracted under pressure in an extraction device, the capsule comprising a system comprising a substance for the preparation of a beverage, the system further comprising its own means for allowing the capsule to be opened at the time of its use and allowing the beverage to flow out without contacting the extraction system.

Furthermore, prior art document PT 2133285 E may also be cited. This document discloses a packaging for drink preparation, the packaging comprising a container with a truncated cone shaped base introducing an extraction fluid e.g. water, into the container.

### Description of the invention

The present disclosure relates to a nutritional drink preparation capsule comprising a controlled outlet system for the outlet of the nutritional drink towards the outside of the capsule.

The controlled outlet system comprises:
- a spike-shaped body that projects outward from the capsule through the bottom of the capsule, where said spike-shaped body produces a bowl-shaped hollow geometry that projects towards the inside of a lower chamber of the capsule;
- a flange of the bowl, comprising a plurality of filtering openings for the nutritional drink, where said flange of the bowl is projected, from the bottom of the lower chamber of the capsule towards the inside of the lower chamber of the capsule;
- a perimeter flange of the lower chamber of the capsule.

The controlled outlet system further comprises a membrane, wherein the membrane is sealed:
- in a first sealing zone on the perimeter flange of the lower chamber of the capsule, and;
- in a second sealing zone on the flange of the bowl of the lower chamber of the capsule.

The membrane comprises a plurality of notches distributed, preferably uniformly and in the form of a ring, around the second sealing zone, that is, around the flange of the bowl. The notches are preferably situated near to the second sealing zone. However, according to alternative embodiments, the notches may be situated and distributed in any way between the two sealing zones.

According to a preferred embodiment, the notches comprise an angular geometry, with the vertex thereof pointing towards the first sealing zone. In this way, when the notches are broken as a result of the increase in hydrostatic pressure inside the capsule, the nutritional drink floods the lower chamber of the capsule heading in the opposite direction to the openings of flange of the bowl, towards the outer side wall of the lower chamber of the capsule.

The membrane is preferably made of a metal material.

The capsule is preferably made of a plastic material.

Thermal welding is preferably used to seal the membrane in the first sealing zone and in the second sealing zone.

### Brief description of the figures

As part of the description of at least one preferred embodiment of the nutritional drink preparation capsule with a controlled outlet system, the following set of figures has been included:
Figure 1 shows a schematic view of one embodiment of the capsule, wherein the membrane and its location relative to the general morphology of the capsule can be seen.
Figure 2 shows a top view of the membrane, wherein the perimeter flange of the lower chamber of the capsule and the flange of the bowl, where the membrane is sealed, have been marked with dashed lines.
Figure 3 shows a cross-sectional view of the capsule, wherein the open membrane is observed after breakage by the pressure generated inside the capsule, wherein it is observed that the membrane opens exactly where the notches have been performed therein.

### Detailed description

As it has been mentioned above, the present disclosure relates to a nutritional drink preparation capsule comprising a controlled outlet system for the nutritional drink.

The controlled outlet system for the nutritional drink comprises a spike (2) that projects outward from the capsule through the lower portion thereof, where said spike (2) produces a hollow geometry in the shape of a bowl (3) towards the inside of the capsule, said bowl (3) being a portion of the lower chamber (4) of the capsule.

The bowl (3) comprises a flange (5) projected towards the inside of the lower chamber (4) of the capsule, where said flange (5) is provided with a plurality of openings (6) along the entire length of the flange (5). Said openings (6) produce a combined effect of filtering and pushing the nutritional drink towards the outer face of the spike (2). The flange (5) separates the bowl (3) from the remainder of the lower chamber (4) of the capsule.

The lower chamber (4) of the capsule comprises an approximately truncated cone geometry, with a step-shaped perimeter flange (7) on the upper base thereof, along the entire perimeter of the upper base of the lower chamber (4) of the capsule.

The main novelty of the controlled outlet system of the capsule of the present disclosure is the provision of a membrane (1) that is sealed both on the perimeter flange (7) of the lower chamber (4) and on the flange (5) of the bowl (3) of the bottom of the lower chamber (4). In this way, the membrane (1) comprises a first sealing zone (8), corresponding to the perimeter flange (7) of the lower chamber (4) of the capsule, and a second sealing zone (9), corresponding to the flange (5) of the bowl (3) of the bottom of the lower chamber (4) of the capsule.

The membrane (1) is also provided with a plurality of notches (10) surrounding the second sealing zone (9). The notches (10) are preferably distributed homogeneously, annularly around said second sealing zone (9).

Thus, the membrane (1) comprises two cantilever zones: an outer cantilever zone (11) corresponding to a surface with a circular ring geometry comprised between the first sealing zone (8) and the second sealing zone (9), and an inner cantilever zone (12) corresponding to a surface with circular geometry comprised above the bowl (3).

The notches (10) of the membrane (1) comprise an angular geometry, with a vertex pointing towards the first sealing zone (8), that is, towards the perimeter flange (7) of the lower chamber (4) of the capsule.

Both the geometry of the notches (10), and the arrangement thereof on the outer cantilever zone (11) of the membrane (1), next to the second sealing zone (9), cause the nutritional drink to flood the lower chamber (4) of the capsule when the membrane (1) breaks at said notches (10), heading radially towards the outer side wall (13) of the lower chamber (4) of the capsule, in the opposite direction to the openings (6) of the flange (5) of the bowl (3).

In this way, the period of time that the food mixture stays inside the lower chamber (4) of the capsule is increased, thereby facilitating the optimal homogenisation thereof.

Likewise, the slowdown of the nutritional drink coming out of the capsule is favoured by the food mixture heading in the opposite direction to the openings (6) of the flange (5) of the bowl (3), such that when the drink filters through the openings (6) and is pushed towards the outer wall of the spike (2), the drink already has a lower kinetic energy and comes out the capsule gradually, and slower than in the case where the membrane (1) described does not exist.

The membrane (1) is preferably made of a metal material, and the sealing in the first sealing zone (8) and in the second sealing zone (9) is preferably carried out by the thermal welding of the membrane (1) to the perimeter flange (7) of the bottom of the lower chamber (4) of the capsule and to the flange (5) of the bowl (3) of the bottom of the lower chamber (4) of the capsule, respectively.

The body of the capsule is preferably made of a plastic material.

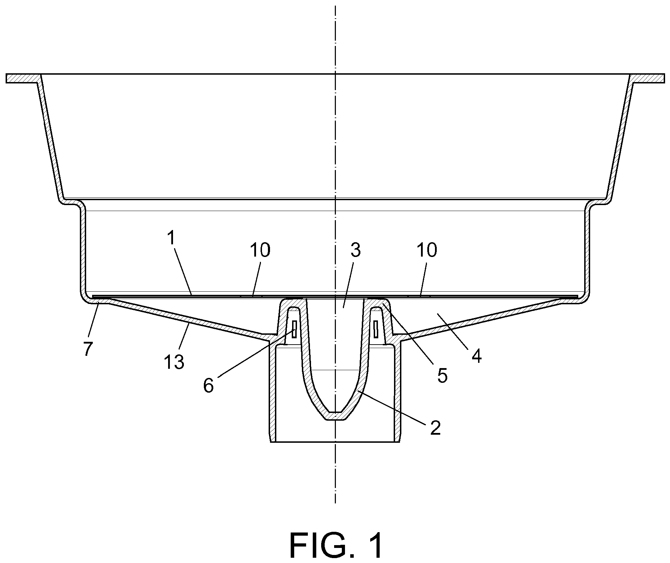

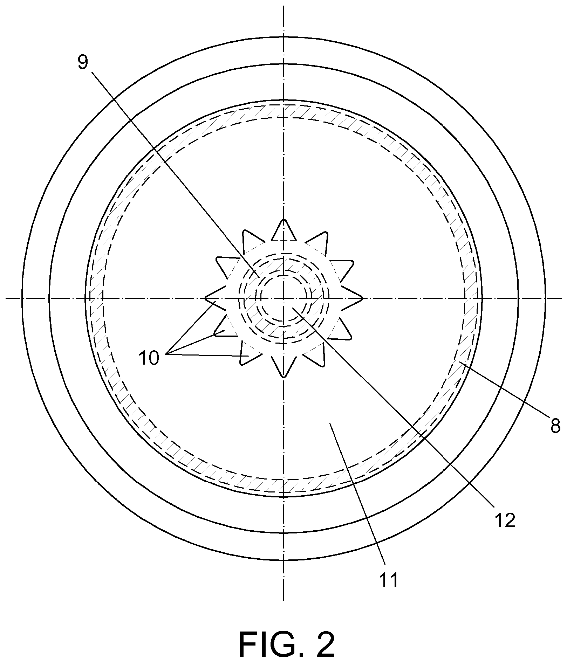

Figures 1 and 2 show the arrangement of the membrane (1) relative to the other elements of the capsule, as described above. Figure 1 shows a cross-sectional view of the capsule with the membrane (1), while figure 2 shows a top view of the capsule with the membrane (1).

As may be seen in figure 2, the inner cantilever zone (12) is considerably smaller (due to the small diameter of the upper portion of the bowl (3)) than the outer cantilever zone (11). Therefore, when the hydrostatic pressure is increased inside the capsule, the pressure on the membrane (1) is essentially focused in the outer cantilever zone (11).

As shown in figure 2, the notches (10) are arranged in the form of a ring around the second sealing zone (9), such that when the hydrostatic pressure increases inside the capsule due to the injection of water, the membrane (1) is preferably broken in correspondence with said notches (10), giving the fluid the desired direction due to the geometry of the notches.

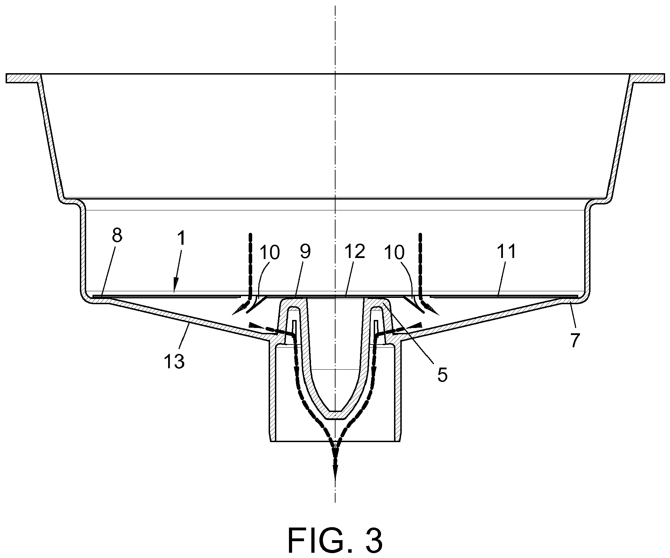

Figure 3 shows a cross-sectional view with the membrane (1) broken at the notches (10). Figure 3 shows the flow lines with the path followed by the food mixture, heading towards the outer side wall (13) of the lower chamber (4) of the capsule, in the opposite direction to the openings (6) of the flange (5) of the bowl (3) to homogenise the mixture and, now with a lower kinetic energy, head towards the outer face of the spike (2) passing through the openings (6).

## Claims

1. A nutritional drink preparation capsule with a controlled outlet system, where the controlled outlet system comprises:
- a spike-shaped body (2) that projects outward from the capsule through the lower base of the capsule, where said spike-shaped body (2) produces a hollow geometry in the shape of a bowl (3) that projects towards the inside of a lower chamber (4) of the capsule;
- a flange (5) of the bowl (3), comprising a plurality of filtering openings (6) of the nutritional drink, where said flange (5) of the bowl (3) is projected, from a bottom of the lower chamber (4) of the capsule towards the inside of the lower chamber (4) of the capsule;
- a perimeter flange (7) of the lower chamber (4) of the capsule;
wherein the controlled outlet system comprises a membrane (1), where the membrane (1) is sealed in a first sealing zone (8) on the perimeter flange (7) of the lower chamber (4) of the capsule;
- **characterised in that** the membrane (1) is additionally sealed in a second sealing zone (9) on the flange (5) of the bowl (3), wherein the membrane (1) comprises a plurality of notches (10) which open as a result of the pressure inside the capsule, wherein the notches (10) are arranged in the form of a ring around of the second sealing zone (9) and wherein the notches (10) comprise an angular geometry, with the vertex thereof pointing towards the first sealing zone (8).

2. The nutritional drink preparation capsule with a controlled outlet system according to claim 1, **characterised in that** the membrane (1) is made of a metal material.

3. The nutritional drink preparation capsule with a controlled outlet system according to claim 1, **characterised in that** the membrane (1) is sealed by thermal welding in the first sealing zone (8) and in the second sealing zone (9).

4. The nutritional drink preparation capsule with a controlled outlet system according to claim 1, **characterised in that** the membrane is provided with notches, wherein said notches are configured to open under the effect of the inside pressure of the capsule, and, once open, guide the flow of nutritional drink towards the outer wall (13) of the lower chamber (4) of the capsule, in the opposite direction to the openings (6) of the flange (5) of the bowl (3), to homogenise the drink and converge towards the openings (6) and the outer face of the spike (2).

## Patentansprüche

1. Kapsel zur Bereitung von Nährgetränken mit einem kontrollierten Auslass-System, wobei das kontrollierte Auslass-System umfasst:
- einen dornförmigen Körper (2), der von der Kapsel durch die untere Basis der Kapsel nach außen vorsteht, wobei der dornförmige Körper (2) eine hohle Geometrie in Form einer Schale (3) erzeugt, die in das Innere einer unteren Kammer (4) der Kapsel vorsteht;
- einen Flansch (5) der Schale (3), der eine Vielzahl von Filteröffnungen (6) für das Nährgetränk umfasst, wobei der Flansch (5) der Schale (3) von einem Boden der unteren Kammer (4) der Kapsel in Richtung der Innenseite der unteren Kammer (4) der Kapsel vorsteht;
- einen Umfangsflansch (7) der unteren Kammer (4) der Kapsel;
wobei das kontrollierte Auslass-System eine Membran (1) umfasst und die Membran (1) in einer ersten Dichtungszone (8) an dem Umfangsflansch (7) der unteren Kammer (4) der Kapsel abgedichtet ist;
- **dadurch gekennzeichnet, dass** die Membran (1) zusätzlich in einer zweiten Dichtungszone (9) an dem Flansch (5) der Schale (3) abgedichtet ist, wobei die Membran (1) eine Vielzahl von Einkerbungen (10) umfasst, die sich aufgrund des Drucks im Inneren der Kapsel öffnen, wobei die Einkerbungen (10) in Form eines Rings um die zweite Dichtungszone (9) herum angeordnet sind und die Einkerbungen (10) eine winkelförmige Geometrie umfassen, deren Scheitelpunkt in Richtung der ersten Dichtungszone (8) zeigt.

2. Kapsel zur Bereitung von Nährgetränken mit einem kontrollierten Auslass-System nach Anspruch 1, **dadurch gekennzeichnet, dass** die Membran (1) aus einem metallischen Material besteht.

3. Kapsel zur Bereitung von Nährgetränken mit einem kontrollierten Auslass-System nach Anspruch 1, **dadurch gekennzeichnet, dass** die Membran (1) in der ersten Dichtungszone (8) und in der zweiten Dichtungszone(9) durch thermisches Schweißen abgedichtet wird.

4. Kapsel zur Bereitung von Nährgetränken mit einem kontrollierten Auslass-System nach Anspruch 1, **dadurch gekennzeichnet, dass** die Membran mit Einkerbungen versehen ist, wobei die Einkerbungen so ausgeführt sind, dass sie sich unter der Einwirkung des Innendrucks der Kapsel öffnen, und, sobald sie geöffnet sind, den Strom des Nährgetränks in Richtung der Außenwand (13) der unteren Kammer (4) der Kapsel in der zu den Öffnungen (6) des Flansches (5) der Schale (3) entgegengesetzten Richtung leiten, um das Getränk zu homogenisieren, und sie in Richtung der Öffnungen (6) sowie der Außenseite des Dorns (2) zusammenlaufen.

## Revendications

1. Une capsule de préparation de boisson nutritionnelle avec un système de sortie contrôlée, le système de sortie contrôlée comprenant :
- un corps (2) en forme de pointe qui fait saillie vers l'extérieur de la capsule à travers la base inférieure de la capsule, ledit corps (2) en forme de pointe produisant une géométrie creuse en forme de bol (3) qui fait saillie vers l'intérieur d'une chambre inférieure (4) de la capsule ;
- une collerette (5) du bol (3), comportant une pluralité d'orifices de filtration (6) de la boisson nutritionnelle, ladite collerette (5) du bol (3) étant en saillie, depuis un fond de la chambre inférieure (4) de la capsule vers l'intérieur de la chambre inférieure (4) de la capsule ;
- une collerette périmétrique (7) de la chambre inférieure (4) de la capsule ; le système de sortie contrôlée comprenant une membrane (1), la membrane (1) étant scellée dans une première zone d'étanchéité (8) sur la collerette périmétrique (7) de la chambre inférieure (4) de la capsule ;
- **caractérisée en ce que** la membrane (1) est en outre fixée de façon étanche dans une deuxième zone d'étanchéité (9) sur la collerette (5) du bol (3), la membrane (1) comprenant une pluralité d'encoches (10) qui s'ouvrent sous l'effet de la pression à l'intérieur de la capsule, les encoches (10) étant agencées selon une forme en anneau autour de la deuxième zone d'étanchéité (9) et les encoches (10) comportant une géométrie angulaire, dont le sommet est dirigé vers la première zone d'étanchéité (8).

2. La capsule de préparation de boisson nutritionnelle à système de sortie contrôlée selon la revendication 1, **caractérisée en ce que** la membrane (1) est faite en un matériau métallique.

3. La capsule de préparation de boisson nutritionnelle à système de sortie contrôlée selon la revendication 1, **caractérisée en ce que** la membrane (1) est scellée par thermosoudage dans la première zone de scellement (8) et dans la deuxième zone de scellement (9).

4. La capsule de préparation de boisson nutritionnelle à système de sortie contrôlée selon la revendication 1, **caractérisée en ce que** la membrane est pourvue d'encoches, lesdites encoches étant configurées pour s'ouvrir sous l'effet de la pression intérieure de la capsule, et, une fois ouverte, pour guider le flux de boisson nutritionnelle vers la paroi externe (13) de la chambre inférieure (4) de la capsule, dans la direction opposée aux ouvertures (6) de la collerette (5) du bol (3), de façon à homogénéiser la boisson et à converger vers les ouvertures (6) et la face externe de la pointe (2).
